# EUROPEAN PATENT SPECIFICATION

(11) **EP 3 391 688 B1**
(45) Date of publication and mention of the grant of the patent: **15.04.2020**
(21) Application number: 15910862.0
(22) Date of filing: 18.12.2015
(51) Int. Cl.: H04W 48/16, H04W 48/20, H04B 7/0452, H04W 84/12

(54) **AN ACCESS POINT, A STATION AND METHODS THEREIN FOR ACCESS POINT SELECTION IN A WIRELESS LOCAL AREA NETWORK**
ZUGANGSPUNKT, STATION UND VERFAHREN DARIN ZUR ZUGANGSPUNKTAUSWAHL IN EINEM DRAHTLOSEN LOKALEN NETZWERK
POINT D'ACCÈS, STATION ET PROCÉDÉS ASSOCIÉS PERMETTANT LA SÉLECTION D'UN POINT D'ACCÈS DANS UN RÉSEAU LOCAL SANS FIL

(43) Date of publication of application: 24.10.2018
(73) Proprietor: Telefonaktiebolaget LM Ericsson (publ), 164 83 Stockholm (SE)
(72) Inventor: MESTANOV, Filip, SE-191 49 Sollentuna (SE); WILHELMSSON, Leif, SE-247 55 Dalby (SE)
(74) Representative: Zacco Sweden AB
(86) International application number: PCT/SE2015/051370
(87) International publication number: WO 2017/105307

(56) References cited:
- WO-A1-2010/140742
- WO-A1-2010/140742
- WO-A2-2008/052066
- WO-A2-2012/096441
- US-A1- 2015 264 587
- BORIS BELLALTA ET AL: "IEEE 802.11ax: High-efficiency WLANS", TECHNICAL REPORT OF WIRELESS NETWORKING GROUP, vol. 23, no. 1, 28 July 2015 (2015-07-28), pages 38-46, XP055362523, US ISSN: 1536-1284, DOI: 10.1109/MWC.2016.7422404
- MING GAN (HUAWEI): "BSS Load Information in 802.11ax", IEEE DRAFT; 11-17-0361-00-00AX-BSS-LOAD-INFORMATION-IN -802-11AX, IEEE-SA MENTOR, PISCATAWAY, NJ USA , vol. 802.11ax 15 March 2017 (2017-03-15), pages 1-14, XP068115427, Retrieved from the Internet: URL:https://mentor.ieee.org/802.11/dcn/17/ 11-17-0361-00-00ax-bss-load-information-in -802-11ax.pptx [retrieved on 2017-03-15]
- BELLALTA BORIS ET AL: "Next generation IEEE 802.11 Wireless Local Area Networks: Current status, future directions and open challenges", COMPUTER COMMUNICATIONS, ELSEVIER SCIENCE PUBLISHERS BV, AMSTERDAM, NL, vol. 75, 10 November 2015 (2015-11-10), pages 1-25, XP029428344, ISSN: 0140-3664, DOI: 10.1016/J.COMCOM.2015.10.007

## Description

### TECHNICAL FIELD

Embodiments herein relate to access point selection in a Wireless Local Area Network, WLAN. In particular, embodiments herein relate to an access point and a method therein for enabling a station to select an access point. Also, embodiments herein relate to a station and a method therein for selecting an access point.

### BACKGROUND

In the standardized IEEE 802.11 Wireless LAN, WLAN, which commonly also may be referred to as a Wi-Fi network, a Basic Serving Set, BSS, is regarded the basic building block of this wireless communications network. The BSS comprise an Access Point, AP, and a number of stations, STAs, located within a certain coverage area or cell being served by the AP. Within a BSS, the coordination of the transmissions between the AP and the STAs is typically performed in a distributed manner using the Distribute Coordination Function, DCF. This means that before a transmission, a STA first performs a Clear Channel Assessment, CCA, by sensing the transmission medium for a specific period of time. If the transmission medium is deemed idle, then the STA transmits; otherwise, the STA typically has to wait a random back-off period and then again check whether the transmission medium is idle and thus available for transmission. The random back-off period provides a collision avoidance mechanism for multiple STAs that wish to transmit in the same BSS. Hence, the standardized IEEE 802.11 Wireless LAN, WLAN, is one example of a wireless communications network using contention-based transmission resources of the same frequency.

Also, STAs that are located within an overlapping coverage area of two or more BSSs may, according to the IEEE 802.11 WLAN standard, commonly be referred to as STAs having Overlapping Basic Service Sets, OBSSs.

Today, STAs supporting this type of wireless technology, i.e. WLAN, may be wireless devices also configured to communicate using cellular communication. As the number of WLAN and their APs is increased in public environments, there will be more APs for the STAs to connect to and the number of handovers of STAs between APs may be expected to grow significantly. The handovers may here refer to handovers between network nodes of cellular communications networks and APs of the WLANs, or between APs of the same or different WLANs.

When a STA searches for a WLAN to connect to, such as, for example, as part of a handover or discovery procedure, it is desirable that the AP to which the STA is to connect to is able to provide as good of a level of service as possible for the WLAN. A STA may today estimate the performance of a WLAN provided by an AP by, for example, reading a so-called BSS Load Element or Extended BSS Load Element broadcasted by the AP in the WLAN.

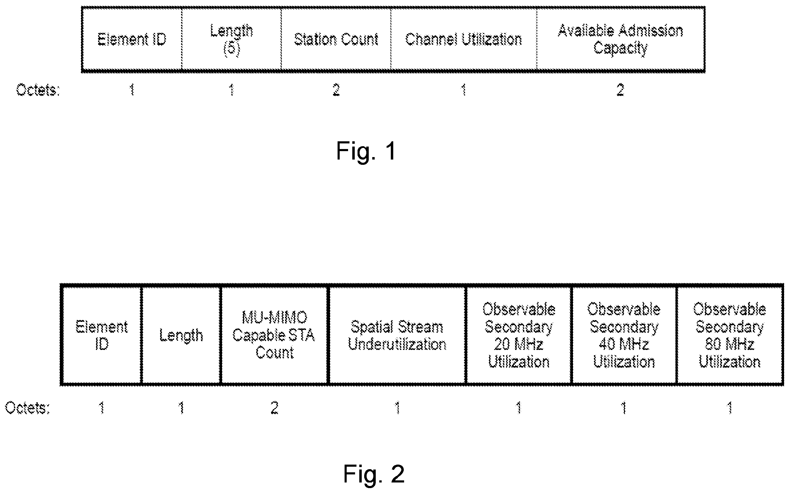

An example of a BSS Load Element according to section 8.4.2.30 in the IEEE 802.11-2012 standard is shown in **Fig. 1****.** The BSS Load Element is an Information Element, IE, that comprise information about the current number of STAs being served by the AP, i.e. the APs STA population, and the current channel utilization in the WLAN. A Station Count field may reveal how many STAs that are associated with the AP, i.e. how many STAs that are currently being served by the AP. However, it should be noted that although a STA is associated with and is being served by an AP, the STA may not currently be active. Thus, a Channel Utilization field is used to indicate the percentage of time that the channel is found busy by the AP, and an Available Admission Capacity field is used to indicate the remaining amount of medium time in the AP that is available via explicit admission control. However, the BSS Load Element only provides the STA with limited amount of information which may lead the STA into performing a non-optimal choice of AP to connect to or to perform a handover to.

This is also the case for the Extended BSS Load Element according to section 8.4.2.162 in the IEEE 802.11ac-2013 standard as shown in **Fig. 2****.** Although, in this case, a MU-MIMO capable STA count field is additionally included which provides further information about how many STAs capable of receiving Multi-User Multiple-Input-Multiple-Output, MU-MIMO, transmissions from the AP that are currently associated with and are being served by the AP.

WO2010140742 describes a method for providing information of access point (AP) selection in a wireless local area network (WLAN) including: an AP transmitting AP selection information comprising channel correlation information for other stations associated with the candidate APs to a STA and a STA selecting one AP from candidate APs according to the channel correlation information corresponding to the candidate APs.

Boris Bellalta et al. in "IEEE 802.11ax: High-efficiency WLANS", Technical Report Of Wireless Networking Group, US, (20150728), vol. 23, no. 1, discuss that in Orthogonal Frequency Division Multiplexing Access (OFDMA), narrow channels can be used to transmit to multiple users in parallel.

### SUMMARY

It is an object of embodiments herein to improve the access point selection by a STA in a WLAN.

According to a first aspect of embodiments herein, the object is achieved by a method performed by an Access Point, AP, of a Wireless Local Area Network, WLAN, for enabling a station, STA, to select an AP. The AP determines information indicating the number of STAs currently being served by the AP which are capable of using Orthogonal Frequency-Division Multiplexing Access, OFDMA, in the WLAN. Then, the AP transmits the determined information to the STA.

According to a second aspect of embodiments herein, the object is achieved by an AP of a WLAN for enabling a STA to select an AP. The AP is configured to determine information indicating the number of STAs currently being served by the AP which are capable of using OFDMA in the WLAN, and transmit the determined information to the STA.

According to a third aspect of embodiments herein, the object is achieved by a method performed by a STA for selecting an AP of a WLAN. The STA receives information indicating the number of STAs currently being served by the AP that are capable of using OFDMA in the WLAN. Then, the STA selects an AP at least partly based on the received information.

According to a fourth aspect of embodiments herein, the object is achieved by a STA for selecting an AP of a WLAN. The STA is configured to receive information indicating the number of STAs currently being served by the AP that are capable of using OFDMA in the WLAN, and select an AP at least partly based on the received information.

According to a fifth aspect of embodiments herein, the object is achieved by a computer program, comprising instructions which, when executed on at least one processor, cause the at least one processor to carry out the method described above. According to a sixth aspect of embodiments herein, the object is achieved by a carrier containing the computer program described above, wherein the carrier is one of an electronic signal, optical signal, radio signal, or computer readable storage medium.

By providing information to a STA in which a differentiation is made between different categories of the STAs that are currently associated with the AP, in particular how many STAs capable of using OFDMA in the WLAN that are currently associated with the AP, the AP provides the STA with information enabling the STA to improve its AP selection and connect to the most suitable AP.

Hence, access point selection of a STA in a WLAN is improved.
Even though embodiments have been summarized above, the claimed embodiments are defined by the accompanying claims.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a schematic block diagram illustrating the format of a BSS Load Element,
- Fig. 2: is a schematic block diagram illustrating the format of an Extended BSS Load Element.
- Fig. 3: is a schematic block diagram illustrating embodiments of an AP and a STA in a WLAN,
- Fig. 4: is a flowchart depicting embodiments of a method in an AP,
- Fig. 5: is a flowchart depicting embodiments of a method in a STA,
- Fig. 6: is a signaling scheme illustrating embodiments of an AP and a STA,
- Fig. 7: is a schematic block diagram depicting embodiments of an AP, and
- Fig. 8: is a schematic block diagram depicting embodiments of a STA.

### DETAILED DESCRIPTION

The figures are schematic and simplified for clarity, and they merely show details which are essential to the understanding of the embodiments presented herein, while other details have been left out. Throughout, the same reference numerals are used for identical or corresponding parts or steps.

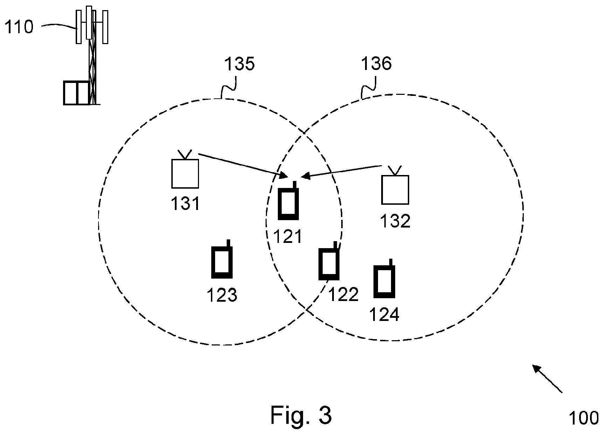

**Fig. 3** shows an example of a **wireless communications network 100** in which embodiments herein may be implemented. The wireless communications network 100 in Fig. 3 comprise two Wireless Local Area Networks, WLANs, i.e. a **first WLAN 135** and a **second WLAN 136.** It should be noted that this is for illustrative purposes only, and that any number of WLANs may be comprised in the wireless communications network 100.

The first and second WLAN 135, 136 each comprise one or more Access Points, APs, configured to provide WLAN coverage and serve stations, STAs, located within their respective coverage area or cell. The APs may also be referred to as network nodes. For example, the first WLAN 135 may comprise a **first AP 131** and the second WLAN 136 may comprise a **second AP 132.** The first and second AP 131, 132 may be configured to provide WLAN coverage and serve stations, STAs, located within their coverage area or cell, respectively, as shown by the dashed areas in Fig. 3. The first and second WLAN 135, 136 may be standardized IEEE 802.11 WLANs.

In the example scenario shown in Fig. 3, **a first and second STA 121, 122** are located in the overlapping area of the cells of the first and second WLAN 135, 136. Also, **a third STA 123** is located in the cell of the first WLAN 135, while a **fourth STA 124** is located in the cell of the second WLAN 136. The STAs 121, 122, 123, 124 may e.g. be any kind of station or wireless device capable of communication via a WLAN. For example, the STAs 121, 122, 123, 124 may be a mobile phone, a cellular phone, a Personal Digital Assistant (PDA), a smart phone, a tablet, a sensor or actuator with wireless communication capabilities, a sensor or actuator connected to or equipped with a wireless device, a Machine Device (MD), a Machine-Type-Communication (MTC) device, a Machine-to-Machine (M2M) communication device, a wireless device with D2D capability, a Customer-Premises Equipment (CPE), a Laptop-Mounted Equipment (LME), a Laptop-Embedded Equipment (LEE), etc.

Hence, the first AP 131 of the first WLAN 135 and the third STA 123 may be referred to as a first Basic Service Set, BSS, while the second AP 132 of the second WLAN 136 and the fourth STA 124 may be referred to as a second BSS. Also, the first and second STA 121, 122 may be said to form an Overlapping BSS, OBSS, with the first and second AP 131, 132 of the first and second WLAN 135, 136, respectively.

Furthermore, the wireless communications network 100 may also comprise a network node 110. The network node 110 may form part of a cellular, wireless or radio communication system providing radio coverage to the STAs 121, 122, 123, 124 over cellular transmission resources. Examples of such cellular, wireless or radio communication systems are, for example, LTE, LTE-Advanced, Wideband Code-Division Multiple Access (WCDMA), Global System for Mobile communications/Enhanced Data rate for GSM Evolution (GSM/EDGE), Worldwide Interoperability for Microwave Access (WiMax), Ultra Mobile Broadband (UMB) or GSM network, or other cellular networks or systems. Here, the network node 110 may e.g. be an eNB, eNodeB, or a Home Node B, a Home eNode B, femto Base Station (BS), pico BS or any other network unit capable to serve wireless devices or STAs on cellular transmission resources in the wireless communications network 100. The network node 110 may also be e.g. a radio base station, a base station controller, a network controller, a relay node, a repeater, a Ultra-Dense Network/Software-Defined Network (UDN/SDN) radio access node, a Remote Radio Unit (RRU) or a Remote Radio Head (RRH).

In some case, the network node 110 may also use contention-based transmission resources of the same frequency, such as, e.g. WLANs. This may also be referred to as the cellular, wireless or radio communication system may being configured to operate in parts of the so-called unlicensed spectrum, i.e. unlicensed frequency bands which are shared, decentralized and not licensed to a particular type of scheduled wireless or radio communication, such as, e.g. the frequency bands of WLANs, i.e. WiFi-networks.

Furthermore, although embodiments below are described with reference to Fig. 3, this should not be construed as limiting to the embodiments herein, but merely as an example made for illustrative purposes.

In general, in WLANs, such as, e.g. an IEEE 802.11 standard WLAN, only one STA is transmitting at a time although the total available bandwidth may be quite large. For example, in an IEEE 802.11n standard WLAN, only one STA is transmitting at a time in a BSS although the total available bandwidth may be as large as 40 MHz. According to another example, in an IEEE 802.11ac standard WLAN, the total available bandwidth may even be as large as 160MHz, while only allowing one STA to transmit at a time in the BSS. However, in this example, it may be possible to multiplex transmissions for up to four STAs in the downlink direction, i.e. from the AP to the STAs. This is made possible through MU-MIMO transmission capabilities at the AP; although, in this case, it should be noted that a large amount of channel information is required in order for the MU-MIMO transmission to be effective, which often results in that a maximum of no more than two simultaneous transmissions are normally performed.

In the next generation of the IEEE 802.11 standard, also referred to as the IEEE 802.11 ax standard, an improved spectrum efficiency in dense deployments of WLANs are targeted. Here, one of the key components is multi-user transmission through the use of Orthogonal Frequency Division Multiple Access, OFDMA. In the IEEE 802.11ax standard, up to 9 STAs may be multiplexed in a 20 MHz channel.

An important aspect considered when developing the embodiments described herein is the fact that there is a significant overhead related to every single STA's transmission, especially when the amount of data is relatively small. In the IEEE 802.11 standard, one reason for this is that every data packet is self-contained. This means that, upon reception of a data packet, a receiver is required to perform synchronization, frequency estimation, channel estimation, etc. In addition, due to the fact that backwards compatibility is achieved by reusing legacy fields defined according to previous standards while new fields may be added in order to develop the standard to handle new types of capabilities, the preamble of the data packets tends to be rather long. For example, for a data packet according to the IEEE 802.11n standard, the preamble may be 40µs long. In this case, the first 20µs is made up of the legacy preamble. The legacy preamble is here largely used for the sole purpose of allowing legacy STAs that are not able to decode a data packet according to the IEEE 802.11n standard to properly defer from accessing the channel. This emphasizes the importance of being able to multiplex many STAs at the same time, such as, for example, made possible in the IEEE 802.11ax standard.

As illustrated in more detail in the example below, it should be noted that only transmitting the load and the number of STAs associated of an AP, such as, e.g. in current BSS Load Element or Extended BSS Load Element, do not suffice in order for a STA to determine how well it can be supported by the AP. In fact, it was discovered that the number of STAs that can effectively be supported by an AP is highly dependent on their capability to support OFDMA. Furthermore, in the example below, it is shown that the additional load of the AP caused by adding one more STA may be as low as zero provided that the added STA is OFDMA capable.

### Example:

Assume that the data that is carried in a data packet corresponds to a voice data packet. Also, assume that a voice data packet needs to be transmitted every 20ms due to delay constraints and that the average data rate needed for voice is 50kb/s, which may correspond to a data packet containing 1kb is to be sent 50 times per second.

If considering, for example, the IEEE 802.11n standard which may support as much as 130Mb/s using 2x2 MIMO, a single data symbol, with a duration of 4µs, may carry 520 bits. Thus, in order to transmit a single voice data packet of 1kb, two data symbols of a total duration of 8µs are needed. However, in addition to this, there is a 40µs preamble. Moreover, before the transmission may begin, there may be channel contention for a certain period of time, and in case the voice data packet is to be acknowledged, there is a TX-RX switching time for switching from transmit to receive (and vice-versa at the other side). For example, assume that the time that the channel is idle is 28µs and that the duration of the ACK is 24µs. The duration of the ACK is based on only using a legacy preamble of 20 µs and a single data symbol to carry the acknowledgement. Thus, in total the duration of the voice data packet is 40 + 8 + 28 + 24 = 100µs. Since a voice packet is required to be transmitted every 20ms, this means that 200 voice users may be supported.

Although, these calculations might be rough estimates, it may well be seen that only a small fraction of the total transmission time is used for actual data transmission. For example, even though the gross data rate was as high as 130 Mb/s, the actual user data rate was only 10Mb/s, i.e. 200 users each having 50kb/s.

In contrast, assume instead that OFDMA is supported and, for example, that 10 users may be supported simultaneously. Since there now will be ten times more data, the number of OFDMA symbols needed is 20, which corresponds to 80µs duration. Assuming that one OFDMA symbol is still sufficient for carrying the ACK for all 10 users, i.e. the duration of the ACK for all 10 users is 24µs, and that the idle time of the channel is still 28µs, the total duration for supporting 10 users becomes 40 + 80 + 28 + 24 = 220µs. This means an efficiency gain of 10/2.2, i.e. more than a factor of 4.

Thus, it has been realized that it is necessary for the STA to not only know the number of STAs that are currently associated with the AP before attempting to connect to the AP, but also the number of STAs capable of supporting OFDMA that are currently associated with the AP; this, in order for the STA to be able to properly determine the most suitable AP to connect to. For example, assume that there are currently 9 STAs associated with an AP, wherein all 9 STAs are able to support OFDMA. Similar calculation as described above will result in that the total duration for supporting the 9 STAs would be 212µs, i.e. two OFDMA symbols less would be needed.

Since, due to practical reasons, scheduling 9 STAs over 10 available sub-channels often result in that one of the sub-channels is left unused, the total duration for transmitting to 9 STAs and the total duration for transmitting to 10 users may in fact be the same. Consequently, this means that adding STA capable of supporting OFDMA in this case would in fact be for free in terms of the total occupied transmission time. However, on the contrary, in case there are 9 STAs that are capable of supporting OFDMA capable users currently associated with the AP and a STA that is not capable of supporting OFDMA is added, the total duration to support these 10 STAs will be the sum of supporting the 9 OFDMA-capable STAs and the single non-OFDMA capable STA, i.e. 220µs + 100µs = 320µs in total.

Hence, as described above, it was noted that that the station count today does not make a difference when it comes to the capabilities of the associated STAs. With the introduction of the IEEE 802.11ax standard multi-user transmission and especially the use of OFDMA, additional considerations may further increase the reliability and efficiency of an AP selection or handover.

The above object is achieved by the embodiments herein by having an AP determine information indicating the number of STAs currently being served by the AP which are capable of using OFDMA in the WLAN and then transmit the determined information to a STA. The object is also achieved by the embodiments herein by having a STA receive information indicating the number of STAs currently being served by the AP that are capable of using OFDMA in the WLAN, and then select an AP at least partly based on the received information.

These embodiments provide a means to improve the system performance by providing means for a STA to connect to the most suitable AP. Another advantage of these embodiments is that, in the initial association between a STA and AP, the risk for de-association or handover due to poor performance is reduced. A further advantage of these embodiments is that, when performing handover of the STA from one AP to a second AP, the expected performance of the second AP may be determined in a more accurate way.

It should be noted that although the description of the embodiments herein is made in view of the IEEE 802.11 standard, along with specific examples regarding different amendments already developed or under development, the embodiments may also be applicable to other standards, as well as, for future amendments of IEEE 802.11 standard. It should also be noted that when herein referring to a field, an Information Element, IE, or part of an IE is intended.

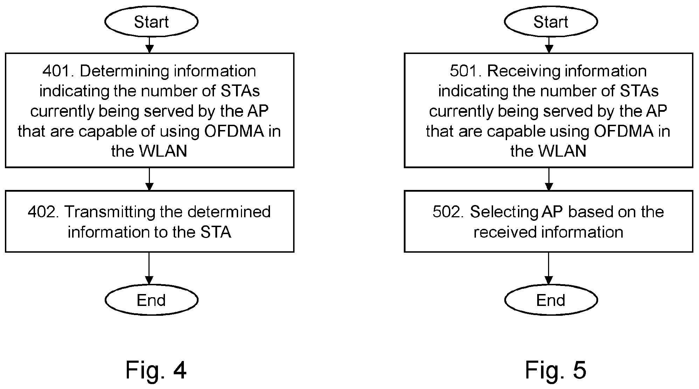

Example of embodiments of a method performed by an AP 131, 132 of a WLAN 135, 136 for enabling a STA 121 to select an AP 131, 132 will now be described with reference to the flowchart depicted in Fig. 4. According to some embodiments, the STA 121 is a station capable of using OFDMA in the WLAN 135, 136.

Fig. 4 illustrates an example of actions or operations which may be taken by the AP 131, 132 as shown in Fig. 3. The method may comprise the following actions.

### Action 401

First, the AP 131, 132 determines information indicating the number of STAs currently being served by the AP 131, 132 which are capable of using OFDMA in the WLAN 135, 136. This means that the AP 131, 132 may provide information to the STA 121 where a differentiation is made between different categories of STAs currently associated with the AP; in particular, indicating how many STAs capable of using OFDMA in the WLAN that are currently associated with the AP 131, 132.

In some embodiments, the determined information may comprise the number of STAs currently being served by the AP 131, 132 capable of using OFDMA in the WLAN 135, 136. This means that the differentiation by the AP 131, 132 may be performed by the AP 131, 132 by explicitly signalling how many STAs of various categories are attached, i.e. explicitly signalling how many STAs capable of using OFDMA in the WLAN are currently associated with the AP 131, 132. Hence, the STA 121 is enabled to perform an AP selection at least partly based on the number of STAs capable of using OFDMA in the WLAN that are currently associated with the AP 131, 132.

Alternatively, in some embodiments, the determined information comprises an estimated performance of the STA 121 in the WLAN 135, 136 in case of selecting the AP 131, 132, wherein the estimated performance of the STA 121 is based on the number of STAs currently being served by the AP 131, 132 capable of using OFDMA in the WLAN 135, 136. This means that the estimated performance may serve as the information indicating the number of STAs currently being served by the AP 131, 132 which are capable of using OFDMA in the WLAN 135, 136. In other words, the differentiation by the AP 131, 132 may be performed by the AP 131, 132 by explicitly signalling which level of performance that the STA 121 may expect depending on the category of STAs currently associated with the AP 131, 132. In this way, the STA 121 is enabled to perform an AP selection at least partly based on the expected performance of the STA 121 in case of connecting to the AP 131, 132.

According to some embodiments, the estimated performance of the STA 121 may be the throughput that the STA 121 is to expect in the WLAN 135, 136 in case of selecting the AP 131, 132. In this way, the STA 121 is enabled to perform an AP selection based on at least partly the expected throughput for the STA 121 in case of connecting to the AP 131, 132.

Optionally, in some embodiments, the estimated performance of the STA 121 may be an average access delay value that the STA 121 is to expect in the WLAN 135, 136 in case of selecting the AP 131, 132. In this way, the STA 121 is enabled to perform an AP selection based on at least partly the expected average access delay for the STA 121 in case of connecting to the AP 131, 132.

For example, a BSS Access Delay IE which informs the STA 121 about the average access delay may be used in this case. Normally, the average access delay in the BSS Access Delay IE would refer to the delay that a legacy STA should expect in the WLAN 135, 136. However, the AP 131, 132 may here send an extended BSS Access Delay IE, wherein the average access delay instead refers to the delay that the STA 121 should expect. It should be noted that when comparing two BSSs, a first BSS may have a higher value for the BSS legacy delay that that a second BSS, whereas the second BSS may have a higher value for the extended BSS legacy delay compared to the first BSS. This means that if the STA 121 and a legacy STA are both looking for a suitable AP 131, 132 to associate with, the STA 121 and the legacy STA may select different APs.

According to another example, a BSS Available Admission Capacity IE, which assists the STA 121 when considering making a handover, may be used in this case. Also, here an extended BSS Available Admission Capacity IE may be determined which is only applicable for the STA 121 and not any legacy STAs.

In some embodiments, the AP 131, 132 may encode the determined information in a Station Count field of a BSS Load Element broadcasted by the AP 131, 132. In other words, the BSS Load Element that is broadcasted by the AP 131, 132 in the WLAN 135, 136, respectively, may be further extended by the AP 131, 132 to also comprise the information indicating how many of the STAs associated with AP 135, 136 that are able to effectively support multi-user transmission using OFDMA. The BSS Load Element to be extended may be a BSS Load Element according to section 8.4.2.30 in the IEEE 802.11-2012 standard as shown in the example of Fig. 2.

For example, assume that 18 STAs which only support the IEEE 802.11n standard are currently associated with AP 131, while 6 STAs which support the IEEE 802.11ax standard are also currently associated with AP 131. In this case, the AP 131 may extend the BSS Load Element that the AP 131 broadcasts in the WLAN 135 to further comprise information that, in total, 24 STAs are currently associated with the AP 131, and that out of these 24 STAs only 6 STAs supports the IEEE 802.11ax standard, i.e. only 6 of the 24 STAs are capable of using OFDMA in the WLAN 135.

It should be noted that a STAs which supports the IEEE 802.11 ax standard is capable of using OFDMA in the WLAN 135. Hence, the determined information may comprise the number of STAs compliant with the IEEE 802.11 ax standard currently being served by the AP 131, 132. However, it should further also be noted that a STA capable of using OFDMA in the WLAN 135 does not necessarily have to support the IEEE 802.11ax standard. Future development of the standards may also comprise STAs capable of using OFDMA in the WLAN 135, and being able to particularly support the IEEE 802.11ax standard may also infer further capabilities which are not considered relevant in the context of the embodiments described herein.

Furthermore, the BSS Load Element may advantageously also be extended in a way such that legacy STAs are still able to read out the total number of associated STAs of the AP 131 from the BSS Load Element, but also such that the legacy STAs will ignore the additional information, i.e. the information indicating how many of the STAs associated with AP 131, 132 that are able capable of using OFDMA in the WLAN 135. This may be referred to as the BSS Load Element having backwards compatibility.

In some embodiments, this backwards compatibility may be achieved by the determined information being encoded into the Station Count field as a quadrature component using Binary Phase Shift Keying, BPSK, while information relating to other STAs currently being served by the AP 131, 132 may be encoded into the Station Count field as an in-phase component using BPSK. This means that the information is encoded in such a way that the information in the Station Count field may be considered to actually be Quadrature Phase Shift Keying, QPSK, encoded. This enables legacy STAs in the WLAN 135, 136 to, as usual, only check the Station Count field for the in-phase component in order to receive the total number of STAs currently associated with the AP 131, 132, while also enabling the STA 121 to check the Station Count field for both in-phase and quadrature components; this, in order to both receive the total number of STAs currently associated with the AP 131, 132, as well as, the number of STAs currently being served by the AP 131, 132 which are capable of using OFDMA in the WLAN 135, 136.

In other words, the total number of STAs currently associated with the AP 131, 132 may be encoded into the Station Count field via BPSK, so that legacy STAs are able to decode this information as usual. However, the determined information may also be encoded into the Station Count field, but as a quadrature component via BPSK. Since the legacy STAs will not expect to receive QPSK encoded data, i.e. data comprising both in-phase and quadrature components, the legacy STAs will only read the in-phase component comprising the information about the total number of STAs currently associated with the AP 131, 132. On the other hand, since the STA 121 may be configured to expect the determined information encoded in a quadrature component, the STA 121 may tune its receiver for QPSK encoded data reception in order to receive both the in-phase and quadrature components of the information in the Station Count field.

This way of achieving the above mentioned backwards compatibility, may also be described as to overlay the information in a way that is transparent for the legacy STAs.

Alternatively, in some embodiments, this may also be achieved by the two Most Significant Bits, MSBs, of the Station Count field of the BSS Load Element being used to indicate that the Station Count field of the BSS Load Element refers to the determined information. This means that backwards compatibility may be achieved by enabling a specific encoding of the Station Count field in the BSS Load Element.

Conventionally, the Station Count field has a length of 2 octets and it is an unsigned integer. This means that it ranges from 0 to 65535. However, only the least significant 14 bits are used to encode the number of STAs; the other two bits of the two octets are always set to "11". The latter corresponds to the two Most Significant Bits, MSBs, of the Station Count field. Thus, in some embodiments, the BSS Load Element may comprise a Station Count field in which these two MSBs are set to, for example, say "00", "01" or "10", in order to indicate which type of capability, e.g. support for multi-user transmission using OFDMA, the number of STAs indicated in the remaining least significant 14 bits denotes.

For example, today the Station Count field may have the following bit format:
"**11***00 0000 0000 0000*"
wherein the bits indicated in **Bold** are always being set to "11", i.e. the first two bits or the first two MSBs, and the bits indicated in *Italic* are indicating the number of associated STAs, i.e. the remaining least significant 14 bits. However, as described above, in some embodiments, the Station Count field may instead have the following bit format:
"0100 0000 0000 0000"
wherein the bits indicated in **Bold** is not always set to "11", but instead used to indicate, e.g. by "01", that the subsequent 14 bits, i.e. the remaining least significant 14 bits noted in *Italic,* are used to denoted the number of STAs currently being served by the AP 131, 132 which are capable of using OFDMA in the WLAN 135, 136. In this way, the two MSBs advantageously tells what kind of STAs that the Station Count field refers to.

Furthermore, assuming that legacy STAs only will be able to read this Station Count field when the two MSBs are set to "11", one option may be to let the three other combinations, i.e. "00", "01", "10", be used to indicate, e.g. the number of IEEE 802.11 ah standard capable STAs, the number of IEEE 802.11ad standard capable STAs, and the number of IEEE 802.11ay standard capable STAs, respectively.

In some embodiments, the BSS Load Element broadcasted by the AP 131, 132 may be an Extended BSS Load Element further comprising a Multiple-User Multiple-In-Multiple-Out, MU-MIMO, capable Station Count field. In other words, the Extended BSS Load Element may be an Extended BSS Load Element according to section 8.4.2.162 in the IEEE 802.11ac-2013 standard as shown in Fig. 2.

According to some embodiments, the Extended BSS Load Element may comprise a dedicated field for the Station Count field of the BSS Load Element. This means that a field would be introduced in the Extended BSS Load Element, which field would be dedicated to indicate the number of STAs currently being served by the AP 131, 132 which are capable of using OFDMA in the WLAN 135, 136. For example, this dedicated field may be included in the Extended BSS Load Element after the MU-MIMO Capable STA Count-field.

### Action 402

After the determination as described in Action 501, the AP 131, 132 transmits the determined information to the STA 121. This may be part of the broadcast transmissions commonly performed by the AP 131, 132, such as, for example, included as a part of the BSS Load Element or Extended BSS Load Element.

As an alternative to broadcasting the determined information in the BSS Load Element or Extended BSS Load Element as described in the embodiments above, a separate dedicated message transmitted from the AP 131, 132 to the STA 121 may also be used. For example, a dedicated Information Element, IE, comprising the determined information may be used, which may be included in any suitable Management, Control or Action Frame transmitted by the AP 131, 132 in the WLAN 135, 136.

In this case, according to some embodiments, the determined information may be transmitted as part of a beacon signal broadcasted by the AP 131, 132. It should here be noted that the number of STAs currently being served by the AP 131, 132 is not normally information that typically needs to be updated in every beacon signal. Therefore, it may be advantageous to, for example, only use every fourth beacon signal that is transmitted by the AP 131, 132 to announce this information, which is what a legacy STA is able to decode. This means that one or more of the other three beacons in between may be used to announce the determined information, e.g. the number of STAs currently being served by the AP 131, 132 which are capable of using OFDMA in the WLAN 135, 136. These may also, for example, be transmitted with reduced or increased periodicity as compared to the every fourth beacon signal intended for legacy STAs.

Optionally, the determined information may be transmitted as part of a probe response transmitted by the AP 131, 132 to the STA 121 in response to receiving a probe request from the STA 121. In other words, the dedicated IE comprising the determined information may be included in a Probe Response frame. This may, for example, be performed if the Probe Request frame was sent from a specific type of STA; that is, if a IEEE 802.11a/b/g/n/ac standard capable STA, i.e. legacy STA, sends a Probe Request frame to the AP131, 132, the AP 131, 132 may not include the dedicated IE comprising the determined information in the Probe Response frame. However, if an IEEE 802.11ax standard capable STA, such as, the STA 121, sends such a Probe Request frame, then the AP 131, 132 may include the dedicated IE comprising the determined information in the Probe Response frame.

According to another alternative, the determined information may be transmitted as part of a dedicated transmission by the AP 131, 132 to the STA 121 in response to receiving a transmission from the STA 121 requesting the determined information. This means having an explicit signalling between the STA 121 and the AP131, 132, where the STA 121 probes for information about the determined information, e.g. the number of STAs currently being served by the AP 131, 132 which are capable of using OFDMA in the WLAN 135, 136.

Example of embodiments of a method performed by a STA 121 for selecting an AP 131, 132 of a WLAN 135, 136, will now be described with reference to the flowchart depicted in Fig. 5. According to some embodiments, the STA 121 may be a station capable of using OFDMA in the WLAN 135, 136.

**Fig. 5** illustrates an example of actions or operations which may be taken by the STA 121 as shown in Fig. 3. The method may comprise the following actions.

### Action 501

The STA 121 starts by receiving information indicating the number of STAs currently being served by the AP 131, 132 that are capable of using OFDMA in the WLAN 135, 136. This means that the STA 121 is provided with information in which a differentiation is made between different categories of STAs currently associated with the AP 131, 132; in particular, information indicating how many STAs capable of using OFDMA in the WLAN that are currently associated with the AP 131, 132. In the example shown in Fig. 3, this means that the STA 121 may receive information from the AP 131 for the WLAN 135 and information from the AP 132 for the WLAN 136.

Furthermore, the information may be received by the STA 121 as part of the broadcast transmissions commonly performed by the AP 131, 132, such as, for example, included as a part of the BSS Load Element or Extended BSS Load Element.

Optionally, the information may be received by the STA 121 in a separate dedicated message transmitted from the AP 131, 132 to the STA 121. Here, the STA 121 may also explicitly request the information from the AP 131 or receive the separate dedicated message as part of a beacon signal. According to another option, the information may be received by the STA 121 as part of a Probe Response frame in response to the STA 121 transmitting a Probe Request frame to the AP 131, 132.

### Action 502

After receiving the information in Action 501, the STA 121 selects an AP 131, 132 at least partly based on the received information. For example, in the example scenario shown in Fig. 3, this means that the STA 121 may compare the information received from AP 131 for the WLAN 135 and the received information from the AP 132 for the WLAN 136, and use this information when determining which AP and WLAN to connect to. This advantageously allows the STA 121 to improve the system performance by connecting to the most suitable AP and WLAN currently available to the STA 121.

In some embodiments, the received information may comprise the number of STAs currently being served by the AP 131, 132 capable of using OFDMA in the WLAN 135, 136. By being explicitly signalled how many STAs capable of using OFDMA in the WLAN that are currently associated with the AP 131, 132, the STA 121 may perform its AP selection at least partly based on the number of STAs capable of using OFDMA in the WLAN that are currently associated with the AP 131, 132. For example, in the example scenario shown in Fig. 3, this means that the STA 121 may compare the number of STAs capable of using OFDMA in the WLAN that are currently associated with the AP 131 in the WLAN 135 with the number of STAs capable of using OFDMA in the WLAN that are currently associated with the AP 132 in the WLAN 136 in order to determine which AP 131, 132 is currently able to provide the highest level of service to the STA 121. Another option may here be that the received information may comprise the number of STAs compliant with the IEEE 802.11 ax standard currently being served by the AP 131, 132.

Alternatively, in some embodiments, the received information comprises an estimated performance of the STA 121 in the WLAN 135, 136 in case of selecting the AP 131, 132, wherein the estimated performance of the STA 121 is based on the number of STAs currently being served by the AP 131, 132 capable of using OFDMA in the WLAN 135, 136. This means that the estimated performance may serve as the information indicating the number of STAs currently being served by the AP 131, 132 which are capable of using OFDMA in the WLAN 135, 136. By being explicitly signalled which level of performance that the STA 121 may expect depending on the category of STAs currently associated with the AP 131, 132, the STA 121 may perform its AP selection at least partly based on the expected performance of the STA 121 in case of connecting to the AP 131, 132. For example, in the example scenario shown in Fig. 3, this means that the STA 121 may compare the estimated performance that it may expect in each of the WLANs 135, 136, i.e. which of the APs 131, 132 that will provide the highest level of service, and thus which of the APs 131, 132 to select.

In some embodiments, the estimated performance of the STA 121 may be the throughput that the STA 121 is to expect in the WLAN 135, 136 in case of selecting the AP 131, 132. Alternatively, in some embodiments, the estimated performance of the STA 121 may be an average access delay value that the STA 121 is to expect in the WLAN 135, 136 in case of selecting the AP 131, 132. This provides the STA 121 with two alternative ways of estimating the performance that the STA 121 may expect from the AP 131, 132 in the WLAN 135, 136.

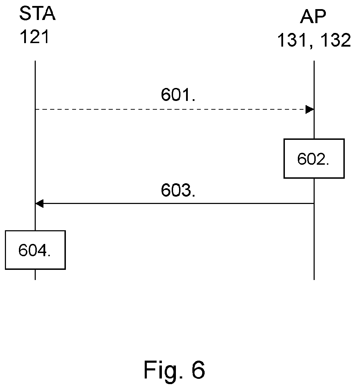

**Fig. 6** illustrates a signaling diagram of signaling that may be performed by embodiments of the AP 131, 132 and the STA 121 as shown in Fig. 3.

**Action 601.** In this optional action, the STA 121 may transmit a dedicated message to the AP 131, 132 requesting information indicating the number of STAs currently being served by the AP 131, 132 that are capable of using OFDMA in the WLAN 135, 136. Alternatively, the STA 121 may transmit a Probe Request frame to the AP 131, 132 in order to receive information indicating the number of STAs currently being served by the AP 131, 132 that are capable of using OFDMA in the WLAN 135, 136 in a corresponding Probe Response frame from the AP 131, 132.

**Action 602.** Here, the AP 131, 132 determines information indicating the number of STAs currently being served by the AP 131, 132 which are capable of using OFDMA in the WLAN 135, 136. Optionally, this may be performed in response to the request message or Probe Request frame received in Action 601.

**Action 603.** The AP 131, 132 then transmits the determined information to the STA 121. The determined information may be transmitted as part of a beacon signal broadcasted in the WLAN 135, 136. Alternatively, the determined information may be transmitted in a Probe Response request in a response to the Probe Request frame in Action 601, or in a dedicated message in a response to the request message in Action 601.

**Action 604.** In response to receiving the information in Action 603, the STA 121 selects an AP 131, 132 at least partly based on the received determined information.

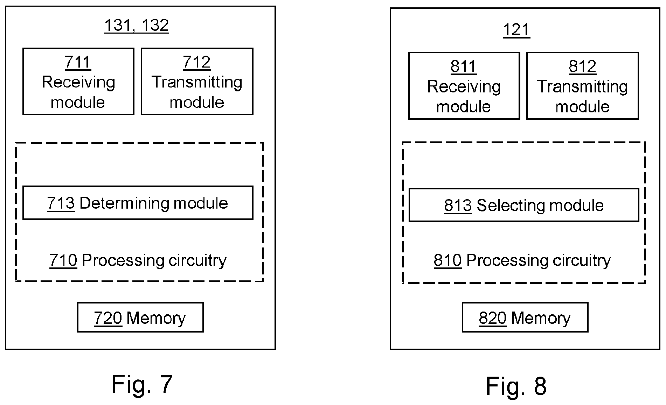

To perform the method actions performed by an AP 131, 132 of a WLAN 135, 136 for enabling a STA 121 to select an AP 131, 132, the AP 131, 132 may comprise the following arrangement depicted in Fig. 7.

**Fig. 7** shows a schematic block diagram of embodiments of the AP 131, 132. The embodiments of the AP 131, 132 described herein may be considered as independent embodiments or may be considered in any combination with each other to describe nonlimiting examples of the example embodiments described herein.

The AP 131, 132 may comprise a **processing circuitry 710,** a **memory 720** and at least one antenna (not shown). The AP 131, 132 may also comprise a **receiving module 711** and a **transmitting module 712.** The receiving module 711 and the transmitting module 712 may comprise Radio Frequency, RF, circuitry and baseband processing circuitry. The receiving module 711 and the transmitting module 712 may also be co-located, such as, in a transceiver, and may also be said to form part of the processing circuitry 710. In some embodiments, some or all of the functionality described above as being performed by the AP 131, 132 may be provided by the processing circuitry 710 executing instructions stored on a computer-readable medium, such as, e.g. the memory 720 shown in Fig. 7. Alternative embodiments of the AP 131, 132 may comprise additional components, such as, the **determining module 713** responsible for providing its functionality necessary to support the embodiments described herein.

The AP 131, 132 or processing circuitry 710 is configured to, or may comprise the determining module 713 configured to, determine information indicating the number of STAs currently being served by the AP 131, 132 which are capable of using OFDMA in the WLAN 135, 136. Also, the AP 131, 132 or processing circuitry 710 is configured to, or may comprise the transmitting module 712 configured to, transmit the determined information to the STA 121.

In some embodiments, the determined information comprise the number of STAs currently being served by the AP 131, 132 capable of using OFDMA in the WLAN 135, 136, or the number of STAs compliant with the IEEE 802.11ax standard currently being served by the AP 131, 132.

Optionally, in some embodiments, the determined information comprises an estimated performance of the STA 121 in the WLAN 135, 136 in case of selecting the AP 131, 132, wherein the estimated performance of the STA 121 is based on the number of STAs currently being served by the AP 131, 132 capable of using OFDMA in the WLAN 135, 136. In this case, according to some embodiments, the estimated performance of the STA 121 is the throughput that the STA 121 is to expect in the WLAN 135, 136 in case of selecting the AP 131, 132. Alternatively, in this case, the estimated performance of the STA 121 is an average access delay value that the STA 121 is to expect in the WLAN 135, 136 in case of selecting the AP 131, 132 according to some embodiments.

In some embodiments, the AP 131, 132 may be configured to encode the determined information in a Station Count field of a Basic Service Set, BSS, load element broadcasted by the AP 131, 132, wherein the determined information is encoded into the Station Count field as a quadrature component using Binary Phase Shift Keying, BPSK, while information relating to other STAs currently being served by the AP 131 is encoded into the Station Count field as an in-phase component using BPSK. Optionally, in some embodiments, the AP 131, 132 may be configured to encode the determined information in a Station Count field of a Basic Service Set, BSS, load element broadcasted by the AP 131, 132, wherein the two Most Significant Bits, MSBs, of the Station Count field of the BSS Load Element is used to indicate that the Station Count field of the BSS Load Element refers to the determined information.

In some embodiments, the BSS Load Element broadcasted by the AP 131, 132 is an extended BSS Load Element further comprising a Multiple-User Multiple-In-Multiple-Out, MU-MIMO, capable Station Count field. In this case, in some embodiments, the extended BSS Load Element may comprise a dedicated field for the Station Count field of the BSS Load Element.

In some embodiments, the AP 131, 132 may be configured to transmit the determined information as part of: a beacon signal broadcasted by the AP 131, 132; a probe response transmitted by the AP 131, 132 to the STA 121 in response to receiving a probe request from the STA 121; or a dedicated transmission by the AP 131, 132 to the STA 121 in response to receiving a transmission from the STA 121 requesting the determined information. In some embodiments, the STA 121 is a station capable of using OFDMA in the WLAN 135, 136.

Furthermore, the embodiments of the AP 131, 132 for enabling a STA 121 to select an AP 131, 132 described above may be implemented through one or more processors, such as, the processing circuitry 710 in the AP 131, 132 depicted in Fig. 7, together with computer program code for performing the functions and actions of the embodiments herein. The program code mentioned above may also be provided as a computer program product, for instance in the form of a data carrier, such as, e.g. an electronic signal, optical signal, radio signal, or computer-readable storage medium, carrying computer program code or code means for performing the embodiments herein when being loaded into the processing circuitry 710 in the AP 131, 132. The computer program code may e.g. be provided as pure program code in the AP 131, 132 or on a server and downloaded to the AP 131, 132.

Those skilled in the art will also appreciate that the processing circuitry 710 and the memory 720 described above may refer to a combination of analog and digital circuits, and/or one or more processors configured with software and/or firmware, e.g. stored in a memory, that when executed by the one or more processors such as the processing circuitry 720 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

It should be noted that the modules of the AP 131, 132 may in some embodiments be implemented as computer programs stored in memory, e.g. in the memory modules 720 in Fig. 7, for execution by processors, e.g. the processing modules 710 of Fig. 7.

To perform the method actions for selecting an AP 131, 132 of a WLAN 135, 136, the STA 121 may comprise the following arrangement depicted in Fig. 8.

**Fig. 8** shows a schematic block diagram of embodiments of the STA 121. The embodiments of the STA 121 described herein may be considered as independent embodiments or may be considered in any combination with each other to describe nonlimiting examples of the example embodiments described herein.

The STA 121 may comprise a **processing circuitry 810,** a **memory 820** and at least one antenna (not shown). The STA 121 may also comprise a **receiving module 811** and a **transmitting module 812.** The receiving module 811 and the transmitting module 812 may comprise Radio Frequency, RF, circuitry and baseband processing circuitry. The receiving module 811 and the transmitting module 812 may also be co-located, such as, in a transceiver, and may also be said to form part of the processing circuitry 810. In some embodiments, some or all of the functionality described above as being performed by the STA 121 may be provided by the processing circuitry 810 executing instructions stored on a computer-readable medium, such as, e.g. the memory 820 shown in Fig. 8. Alternative embodiments of the STA 121 may comprise additional components, such as, the **selecting module 813** responsible for providing its functionality necessary to support the embodiments described herein.

The STA 121 or processing circuitry 810 is configured to, or may comprise the receiving module 811 configured to, receive information indicating the number of STAs currently being served by the AP 131, 132 that are capable of using OFDMA in the WLAN 135, 136. Also, the STA 121 or processing circuitry 810 is configured to, or may comprise the selecting module 812 configured to, select an AP 131, 132 at least partly based on the received information.

In some embodiments, the received information comprise the number of STAs currently being served by the AP 131, 132 capable of using OFDMA in the WLAN 135, 136, or the number of STAs compliant with the IEEE 802.11ax standard currently being served by the AP 131, 132.

Optionally, in some embodiments, the received information comprises an estimated performance of the STA 121 in the WLAN 135, 136 in case of selecting the AP 131, 132, wherein the estimated performance of the STA 121 is based on the number of STAs currently being served by the AP 131, 132 capable of using OFDMA in the WLAN 135, 136. In this case, according to some embodiments, the estimated performance of the STA 121 is the throughput that the STA 121 is to expect in the WLAN 135, 136 in case of selecting the AP 131, 132. Alternatively, in this case, the estimated performance of the STA 121 is an average access delay value that the STA 121 is to expect in the WLAN 135, 136 in case of selecting the AP 131, 132 according to some embodiments.

In some embodiments, the STA 121 is a station capable of using OFDMA in the WLAN 135, 136.

Furthermore, the embodiments of the STA 121 for selecting an AP 131, 132 of a WLAN 135, 136 described above may be implemented through one or more processors, such as, the processing circuitry 810 in the STA 121 depicted in Fig. 8, together with computer program code for performing the functions and actions of the embodiments herein. The program code mentioned above may also be provided as a computer program product, for instance in the form of a data carrier, such as, e.g. an electronic signal, optical signal, radio signal, or computer-readable storage medium, carrying computer program code or code means for performing the embodiments herein when being loaded into the processing circuitry 810 in the STA 121. The computer program code may e.g. be provided as pure program code in the STA 121 or on a server and downloaded to the STA 121.

Those skilled in the art will also appreciate that the processing circuitry 810 and the memory 820 described above may refer to a combination of analog and digital circuits, and/or one or more processors configured with software and/or firmware, e.g. stored in a memory, that when executed by the one or more processors such as the processing circuitry 820 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

It should be noted that the modules of the STA 121 may in some embodiments be implemented as computer programs stored in memory, e.g. in the memory modules 820 in Fig. 8, for execution by processors, e.g. the processing modules 810 of Fig. 8.

For all of the embodiments described above, it should be noted that Orthogonal Frequency-Division Multiple Access, OFDMA, is a multi-user version of the OFDM scheme. Multiple access is achieved in OFDMA by assigning subsets of subcarriers to individual data streams. This allows simultaneous transmission of several individual data streams. OFDMA further improves OFDM robustness to fading and interference, but more importantly the individual data streams may be used either to communicate with multiple devices simultaneously or for redundancy, thus greatly improving the reliability of the wireless communications network. Furthermore, when using the wording "capable of using OFDMA in the WLAN" above, either one of or both of transmitting and receiving multi-user transmissions using OFDMA in the WLAN is intended. In other words, uplink, UL, transmissions and downlink, DL, transmissions using OFDMA in the WLAN may be supported by the AP 131, 132 and the STA 121.

The terminology used in the detailed description of the particular embodiments illustrated in the accompanying drawings is not intended to be limiting of the described AP 131, 132, STA 121 and methods therein which instead should be construed in view of the enclosed claims.

As used herein, the term "and/or" comprises any and all combinations of one or more of the associated listed items.

Further, as used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation. The common abbreviation "etc.", which derives from the Latin expression "et cetera" meaning "and other things" or "and so on" may have been used herein to indicate that further features, similar to the ones that have just been enumerated, exist.

As used herein, the singular forms "a", "an" and "the" are intended to comprise also the plural forms as well, unless expressly stated otherwise. It will be further understood that the terms "includes," "comprises," "including" and/or "comprising," when used in this specification, specify the presence of stated features, actions, integers, steps, operations, elements, and/or components, but do not preclude the presence or addition of one or more other features, actions, integers, steps, operations, elements, components, and/or groups thereof.

Unless otherwise defined, all terms comprising technical and scientific terms used herein have the same meaning as commonly understood by one of ordinary skill in the art to which the described embodiments belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

### Abbreviations

- OFDM: Orthogonal Frequency Division Multiplexing
- OFDMA: Orthogonal Frequency Division Multiple Access
- AP: Access Point
- STA: Station
- ACK: Acknowledgement
- OBSS: Overlapping Basic Service Sets
- BSS: Basic Service Set
- WLAN: Wireless Local Area Network
- MU-MIMO: Multi-User Multiple-Input-Multiple-Output
- HO: Handover
- SNR: Signal-to-Noise-Ratio
- SINR: Signal-to-Noise-plus-Interference-Ratio
- TX: Transmission
- RX: Reception
- DCF: Distribute Coordination Function

## Claims

1. A method performed by an Access Point, AP (131, 132), of a Wireless Local Area Network, WLAN (135, 136), for enabling a station, STA (121), to select an AP (131, 132), the method comprising
*determining* (401, 602) information indicating the number of STAs currently being served by the AP (131, 132) which are capable of using Orthogonal Frequency-Division Multiplexing Access, OFDMA, in the WLAN (135, 136); and
*transmitting* (402, 603) the determined information to the STA (121).

2. The method according to claim 1, wherein the determined information comprises the number of STAs currently being served by the AP (131, 132) capable of using OFDMA in the WLAN (135, 136).

3. An Access Point, AP (131, 132), of a Wireless Local Area Network, WLAN (135, 136), for enabling a station, STA (121), to select an AP (131, 132), the AP (131, 132) is configured to
determine information indicating the number of STAs currently being served by the AP (131, 132) which are capable of using Orthogonal Frequency-Division Multiplexing Access, OFDMA, in the WLAN (135, 136), and transmit the determined information to the STA (121).

4. The AP (131, 132) according to claim 3, wherein the determined information comprises the number of STAs currently being served by the AP (131, 132) capable of using OFDMA in the WLAN (135, 136).

5. The AP (131, 132) according to claim 4, wherein the determined information comprises the number of STAs compliant with the IEEE 802.11ax standard currently being served by the AP (131, 132).

6. The AP (131, 132) according to claim 3, wherein the determined information comprises an estimated performance of the STA (121) in the WLAN (135, 136) in case of selecting the AP (131, 132), wherein the estimated performance of the STA (121) is based on the number of STAs currently being served by the AP (131, 132) capable of using OFDMA in the WLAN (135, 136).

7. The AP (131, 132) according to claim 6, wherein the estimated performance of the STA (121) is:
- the throughput that the STA (121) is to expect in the WLAN (135, 136) in case of selecting the AP (131, 132), or
- an average access delay value that the STA (121) is to expect in the WLAN (135, 136) in case of selecting the AP (131, 132).

8. A method performed by a station, STA (121), for selecting an Access Point, AP (131, 132), of a Wireless Local Area Network, WLAN (135, 136), the method comprising
*receiving* (501, 603) information indicating the number of STAs currently being served by the AP (131, 132) that are capable of using Orthogonal Frequency-Division Multiplexing Access, OFDMA, in the WLAN (135, 136); and
*selecting* (502, 604) an AP (131, 132) at least partly based on the received information.

9. The method according to claim 8, wherein the received information comprises the number of STAs currently being served by the AP (131, 132) capable of using OFDMA in the WLAN (135, 136).

10. A station, STA (121), for selecting an Access Point, AP (131, 132), of a Wireless Local Area Network, WLAN (135, 136), the STA (121) is configured to
receive information indicating the number of STAs currently being served by the AP (131, 132) that are capable of using Orthogonal Frequency-Division Multiplexing Access, OFDMA, in the WLAN (135, 136), and select an AP (131, 132) at least partly based on the received information.

11. The STA (121) according to claim 10, wherein the received information comprises the number of STAs currently being served by the AP (131, 132) capable of using OFDMA in the WLAN (135, 136).

12. The STA (121) according to claim 11, wherein the received information comprises the number of STAs compliant with the IEEE 802.11 ax standard currently being served by the AP (131, 132).

13. The STA (121) according to claim 10, wherein the received information comprises an estimated performance of the STA (121) in the WLAN (135, 136) in case of selecting the AP (131, 132), wherein the estimated performance of the STA (121) is based on the number of STAs currently being served by the AP (131, 132) capable of using OFDMA in the WLAN (135, 136).

14. The STA (121) according to claim 13, wherein the estimated performance of the STA (121) is:
- the throughput that the STA (121) is to expect in the WLAN (135, 136) in case of selecting the AP (131, 132), or
- an average access delay value that the STA (121) is to expect in the WLAN (135, 136) in case of selecting the AP (131, 132).

15. A computer program product, comprising instructions which, when executed on at least one processor (710; 810) of an Access Point, AP (131, 132), according to claims 3-7 or of a station, STA (121), according to claims 10-14, cause the at least one processor (710; 810) to carry out the method according to any of claims 1-2 or claims 8-9 respectively.

16. A carrier containing the computer program product according to claim 15, wherein the carrier is one of an electronic signal, optical signal, radio signal, or computer-readable storage medium.

## Patentansprüche

1. Verfahren, das durch einen Zugangspunkt, AP (131, 132) eines drahtlosen lokalen Netzwerks, WLAN (135, 136), durchgeführt wird, um es einer Station, STA (121) zu ermöglichen, einen AP (131, 132) auszuwählen, wobei das Verfahren umfasst:
*Bestimmen* (401, 602) von Informationen, die die Anzahl von STAs angeben, die derzeit durch den AP (131, 132) bedient werden, die einen orthogonalen Frequenzmultiplexzugriff, OFDMA, in dem WLAN (135, 136) nutzen können; und
*Übertragen* (402, 603) der bestimmten Informationen an die STA (121) .

2. Verfahren nach Anspruch 1, wobei die bestimmten Informationen die Anzahl von STAs umfassen, die derzeit vom AP (131, 132) bedient werden, die OFDMA im WLAN (135, 136) nutzen können.

3. Zugangspunkt, AP (131, 132), eines drahtlosen lokalen Netzwerks, WLAN (135, 136), um einer Station, STA (121), die Auswahl eines AP (131, 132) zu ermöglichen, wobei der AP (131, 132) konfiguriert ist zum
Bestimmen von Informationen, die die Anzahl von derzeit vom AP bedienten STAs (131, 132) angeben, die den orthogonalen Frequenzmultiplexzugriff, OFDMA, im WLAN (135, 136) nutzen können, und Übertragen der bestimmten Informationen an die STA (121) .

4. AP (131, 132) nach Anspruch 3, wobei die bestimmten Informationen die Anzahl von STAs umfassen, die derzeit vom AP (131, 132) bedient werden, die OFDMA im WLAN (135, 136) nutzen können.

5. AP (131, 132) nach Anspruch 4, wobei die bestimmten Informationen die Anzahl von STAs entsprechend der Norm IEEE 802.11ax umfassen, die derzeit vom AP (131, 132) bedient werden.

6. AP (131, 132) nach Anspruch 3, wobei die bestimmten Informationen eine geschätzte Leistung der STA (121) im WLAN (135, 136) im Falle der Auswahl des AP (131, 132) umfassen, wobei die geschätzte Leistung der STA (121) auf der Anzahl von STAs basiert, die derzeit vom AP (131, 132) bedient werden, die OFDMA im WLAN (135, 136) nutzen können.

7. AP (131, 132) nach Anspruch 6, wobei die geschätzte Leistung der STA (121) ist:
- der Durchsatz, den die STA (121) im WLAN (135, 136) im Falle der Auswahl des AP (131, 132) zu erwarten hat, oder
- ein durchschnittlicher Wert für die Zugriffsverzögerung, die die STA (121) im WLAN (135, 136) im Falle der Auswahl des AP (131, 132) zu erwarten hat.

8. Von einer Station, STA (121), durchgeführtes Verfahren zur Auswahl eines Zugangspunktes, AP (131, 132), eines drahtlosen lokalen Netzwerks, WLAN (135, 136), wobei das Verfahren umfasst:
*Empfangen* (501, 603) von Informationen, die die Anzahl der derzeit vom AP (131, 132) bedienten STAs angeben, die den orthogonalen Frequenzmultiplexzugang, OFDMA, im WLAN (135, 136) nutzen können; und
*Auswählen* (502, 604) eines AP (131, 132) zumindest teilweise auf der Grundlage der empfangenen Informationen.

9. Verfahren nach Anspruch 8, bei dem die empfangenen Informationen die Anzahl von STAs umfassen, die derzeit vom AP (131, 132) bedient werden, die OFDMA im WLAN (135, 136) nutzen können.

10. Station, STA (121), zum Auswählen eines Zugangspunktes, AP (131, 132), eines drahtlosen lokalen Netzwerks, WLAN (135, 136), wobei die STA (121) konfiguriert ist zum:
Empfangen von Informationen, die die Anzahl der derzeit vom AP bedienten STAs (131, 132) angeben, die den orthogonalen Frequenzmultiplexzugang, OFDMA, im WLAN (135, 136) nutzen können,
und Auswählen eines AP (131, 132) zumindest teilweise basierend auf den empfangenen Informationen.

11. STA (121) nach Anspruch 10, wobei die empfangenen Informationen die Anzahl von STAs umfassen, die derzeit vom AP (131, 132) bedient werden, die OFDMA im WLAN (135, 136) nutzen können.

12. STA (121) nach Anspruch 11, wobei die empfangenen Informationen die Anzahl von STAs entsprechend der Norm IEEE 802.11ax umfassen, die derzeit vom AP bedient werden (131, 132).

13. STA (121) nach Anspruch 10, wobei die empfangenen Informationen eine geschätzte Leistung der STA (121) im WLAN (135, 136) im Falle der Auswahl des AP (131, 132) umfassen, wobei die geschätzte Leistung der STA (121) auf der Anzahl von STAs basiert, die derzeit von dem AP (131, 132) bedient werden, die OFDMA im WLAN (135, 136) nutzen können.

14. STA (121) nach Anspruch 13, wobei die geschätzte Leistung der STA (121) ist:
- der Durchsatz, den die STA (121) im WLAN (135, 136) im Falle der Auswahl des AP (131, 132) zu erwarten hat, oder
- ein durchschnittlicher Wert für die Zugriffsverzögerung, die die STA (121) im WLAN (135, 136) im Falle der Auswahl des AP (131, 132) zu erwarten hat.

15. Computerprogrammprodukt, umfassend Anweisungen, die, wenn sie auf mindestens einem Prozessor (710; 810) eines Zugangspunktes, AP (131, 132), nach den Ansprüchen 3-7 oder einer Station, STA (121), nach den Ansprüchen 10-14 ausgeführt werden, den mindestens einen Prozessor (710; 810) dazu veranlassen, das Verfahren nach einem der Ansprüche 1-2 bzw. der Ansprüche 8-9 auszuführen.

16. Träger, der das Computerprogrammprodukt nach Anspruch 15 enthält, wobei der Träger eines von einem elektronischen Signal, einem optischen Signal, einem Funksignal oder einem computerlesbaren Speichermedium ist.

## Revendications

1. Procédé mis en œuvre par un point d'accès, AP (131, 132), d'un réseau local sans fil, WLAN (135, 136), pour permettre à une station, STA (121), de sélectionner un AP (131, 132), le procédé comprenant
la *détermination* (401, 602) d'informations indiquant le nombre de STA étant actuellement desservies par l'AP (131, 132) qui sont capables d'utiliser un accès par multiplexage par répartition orthogonale de la fréquence, OFDMA, dans le WLAN (135, 136) ; et
la *transmission* (402, 603) des informations déterminées à la STA (121).

2. Procédé selon la revendication 1, dans lequel les informations déterminées comprennent le nombre de STA étant actuellement desservies par l'AP (131, 132) capables d'utiliser OFDMA dans le WLAN (135, 136).

3. Point d'accès, AP (131, 132), d'un réseau local sans fil, WLAN (135, 136), pour permettre à une station, STA (121), de sélectionner un AP (131, 132), l'AP (131, 132) est configuré pour
déterminer des informations indiquant le nombre de STA étant actuellement desservies par l'AP (131, 132) qui sont capables d'utiliser un accès par multiplexage par répartition orthogonale de la fréquence, OFDMA, dans le WLAN (135, 136), et transmettre les informations déterminées à la STA (121).

4. AP (131, 132) selon la revendication 3, dans lequel les informations déterminées comprennent le nombre de STA étant actuellement desservies par l'AP (131, 132) capables d'utiliser OFDMA dans le WLAN (135, 136).

5. AP (131, 132) selon la revendication 4, dans lequel les informations déterminées comprennent le nombre de STA conformes à la norme IEEE 802.11ax étant actuellement desservies par l'AP (131, 132).

6. AP (131, 132) selon la revendication 3, dans lequel les informations déterminées comprennent une performance estimée de la STA (121) dans le WLAN (135, 136) en cas de sélection de l'AP (131, 132), dans lequel la performance estimée de la STA (121) est basée sur le nombre de STA étant actuellement desservies par l'AP (131, 132) capables d'utiliser OFDMA dans le WLAN (135, 136).

7. AP (131, 132) selon la revendication 6, dans lequel la performance estimée de la STA (121) est :
- la capacité de traitement à laquelle la STA (121) doit s'attendre dans le WLAN (135, 136) en cas de sélection de l'AP (131, 132), ou
- une valeur moyenne de délai d'accès à laquelle la STA (121) doit s'attendre dans le WLAN (135, 136) en cas de sélection de l'AP (131, 132) .

8. Procédé mis en œuvre par une station, STA (121), pour sélectionner un point d'accès, AP (131, 132), d'un réseau local sans fil, WLAN (135, 136), le procédé comprenant
la *réception* (501, 603) d'informations indiquant le nombre de STA étant actuellement desservies par l'AP (131, 132) qui sont capables d'utiliser un accès par multiplexage par répartition orthogonale de la fréquence, OFDMA, dans le WLAN (135, 136) ; et
la *sélection* (502, 604) d'un AP (131, 132) au moins partiellement sur la base des informations reçues.

9. Procédé selon la revendication 8, dans lequel les informations reçues comprennent le nombre de STA étant actuellement desservies par l'AP (131, 132) capables d'utiliser OFDMA dans le WLAN (135, 136).

10. Station, STA (121), pour sélectionner un point d'accès, AP (131, 132), d'un réseau local sans fil, WLAN (135, 136), la STA (121) est configurée pour
recevoir des informations indiquant le nombre de STA étant actuellement desservies par l'AP (131, 132) qui sont capables d'utiliser un accès par multiplexage par répartition orthogonale de la fréquence, OFDMA, dans le WLAN (135, 136), et sélectionner un AP (131, 132) au moins partiellement sur la base des informations reçues.

11. STA (121) selon la revendication 10, dans laquelle les informations reçues comprennent le nombre de STA étant actuellement desservies par l'AP (131, 132) capables d'utiliser OFDMA dans le WLAN (135, 136).

12. STA (121) selon la revendication 11, dans laquelle les informations reçues comprennent le nombre de STA conformes à la norme IEEE 802.11ax étant actuellement desservies par l'AP (131, 132).

13. STA (121) selon la revendication 10, dans laquelle les informations reçues comprennent une performance estimée de la STA (121) dans le WLAN (135, 136) en cas de sélection de l'AP (131, 132), dans laquelle la performance estimée de la STA (121) est basée sur le nombre de STA étant actuellement desservies par l'AP (131, 132) capables d'utiliser OFDMA dans le WLAN (135, 136) .

14. STA (121) selon la revendication 13, dans laquelle la performance estimée de la STA (121) est :
- la capacité de traitement à laquelle la STA (121) doit s'attendre dans le WLAN (135, 136) en cas de sélection de l'AP (131, 132), ou
- une valeur moyenne de délai d'accès à laquelle la STA (121) doit s'attendre dans le WLAN (135, 136) en cas de sélection de l'AP (131, 132) .

15. Produit programme informatique, comprenant des instructions qui, lorsqu'elles sont exécutées sur au moins un processeur (710 ; 810) d'un point d'accès, AP (131, 132), selon les revendications 3 à 7 ou d'une station, STA (121), selon les revendications 10 à 14, amènent l'au moins un processeur (710 ; 810) à effectuer le procédé selon l'une quelconque des revendications 1 ou 2 ou les revendications 8 ou 9 respectivement.

16. Porteuse contenant le produit programme informatique selon la revendication 15, dans laquelle la porteuse est l'un parmi un signal électronique, un signal optique, un signal radio, ou un support de stockage lisible par ordinateur.
